# FASCICULE DE BREVET EUROPEEN

(11) **EP 3 582 601 B1**
(45) Date de publication et mention de la délivrance du brevet: **05.08.2020**
(21) Numéro de dépôt: 18707102.2
(22) Date de dépôt: 09.02.2018
(51) Int. Cl.: A01C 1/04, A01G 24/44, A01G 9/029

(54) **ÉLÉMENT POUR LA CULTURE D'AU MOINS UNE PLANTE ET PROCÉDÉ DE RÉALISATION DE L'ÉLÉMENT**
ELEMENT ZUR KULTIVIERUNG VON MINDESTENS EINER PFLANZE UND VERFAHREN ZUR HERSTELLUNG DES ELEMENTS
ELEMENT FOR CULTIVATING AT LEAST ONE PLANT AND METHOD FOR PRODUCING THE ELEMENT

(30) Priorité: 17.02.2017 FR 1751274
(43) Date de publication de la demande: 25.12.2019
(73) Titulaire: Veritable, 07000 Lyas (FR)
(72) Inventeur: GEHIN, Nicolas, 69300 Caluire-et-Cuire (FR); VERNEUIL, Chloé, 69300 Caluire-et-Cuire (FR)
(74) Mandataire: Delorme, Nicolas
(86) Numéro de dépôt international: PCT/FR2018/050318
(87) Numéro de publication internationale: WO 2018/150127

(56) Documents cités:
- EP-A1- 3 100 602
- WO-A1-2012/001130
- DE-U1-202014 101 486
- FR-A1- 2 171 020
- US-A- 4 586 288

## Description

La présente invention concerne un élément destiné à être placé dans un récipient pour la culture d'au moins une plante. L'invention concerne également un système de culture d'au moins une plante comprenant un tel élément, et un procédé de réalisation d'un tel élément.

Il existe une demande croissante pour des potagers d'intérieur qui permettent de cultiver chez soi des fruits, des légumes, et des herbes aromatiques toute l'année, de façon simple.

De façon classique, un tel potager est un système de culture de plantes qui comprend un bac contenant de l'eau, ainsi que des récipients placés dans le bac et conçus pour permettre la remontée d'eau par capillarité. Chacun des récipients reçoit un élément comprenant un corps comportant un substrat, et au moins une graine disposée sur le corps.

Les éléments sont des consommables que l'utilisateur achète, utilise puis remplace au fur et à mesure de ses besoins. Il est impératif que les graines soient bien maintenues sur le corps pendant le transport et le stockage de l'élément afin qu'elles restent présentes, bien entendu, mais également pour que leur positionnement sur le substrat reste inchangé. En effet, ce positionnement est généralement prédéterminé pour permettre une germination satisfaisante des graines. Ainsi, il est connu de prévoir un dispositif de maintien de la ou des graines dans la zone de réception, notamment dans le document FR-A-2171020.

Une première solution connue consiste à prévoir un opercule recouvrant la ou les graines, l'opercule ayant une partie collante pour venir se fixer sur le corps de l'élément, et une partie non collante en vis-à-vis des graines. L'utilisateur n'a plus qu'à ôter l'opercule avant de placer l'élément dans le récipient. Cette solution nécessite donc une opération supplémentaire de la part de l'utilisateur et génère des déchets.

Selon une deuxième solution connue, la ou les graines sont déposées dans un logement en creux ménagé dans le corps, et un substrat est déposé sur la ou les graines, en remplissant le logement. Là encore, un opercule collant peut être prévu, comme décrit précédemment. On retrouve donc les mêmes inconvénients que ceux mentionnés ci-dessus.

Une troisième solution connue consiste à déposer sur la ou les graines une goutte d'une composition contenant de l'eau et de la colle alimentaire. Les graines se trouvent donc collées sur le corps, ce qui assure leur maintien. Toutefois, cette solution pose un certain nombre de problèmes. En particulier, elle n'assure pas un maintien suffisant des graines de grosses dimensions, et ne permet pas une gestion satisfaisante du taux d'humidité au voisinage de la graine. En outre, si la colle assure le maintien des graines, en tout cas des graines de petites dimensions, en revanche elle n'offre que très peu de protection contre les agressions extérieures. Par ailleurs, l'utilisation de colle alimentaire peut conférer un aspect peu naturel susceptible de rebuter l'utilisateur.

L'invention vise à fournir un élément dans lequel les graines sont maintenues de façon satisfaisante, et qui résolve tout ou partie des problèmes précités.

A cet effet, et selon un premier aspect, l'invention concerne un élément destiné à être placé dans un récipient pour la culture d'au moins une plante, l'élément comprenant :
- un corps sensiblement solide comportant un substrat apte à permettre à ladite plante de se développer ;
- au moins une graine de ladite plante disposée sur le corps dans au moins une zone de réception de graines ;
- une couche de maintien de la ou des graines dans ladite zone de réception ;
dans lequel ladite couche de maintien comprend une poudre minérale séchée formant un dépôt configuré pour fixer solidement la graine sur le corps.

Par « sensiblement solide », on entend que l'élément possède une forme définie, et que, lorsqu'il est manipulé lors de son utilisation normale (transport, mise en place dans le système de culture), il conserve cette forme. Ceci n'exclut pas une déformation locale de l'élément - par exemple la création d'une entaille par un ongle de l'utilisateur. Bien entendu, une déformation importante de l'élément reste possible sous des efforts supérieurs à ceux s'exerçant pour l'utilisation prévue de l'élément.

Par ailleurs, il est précisé que le fait que la graine est disposée sur le corps signifie que la graine n'est pas enfoncée dans le corps lui-même, mais déposée sur une surface du corps de l'élément. Ceci n'exclut pas que la graine soit placée dans une cavité du corps ouverte vers l'extérieur du corps, la graine restant alors visible et accessible depuis l'extérieur du corps.

L'invention prévoit que la couche de maintien comprenne une poudre minérale séchée, c'est-à-dire une poudre minérale qui, initialement humide ou dispersée dans une solution aqueuse, a séché. En d'autres termes, il y a eu élimination d'eau, par exemple par simple séchage à l'air et/ou par absorption d'eau dans le corps, typiquement dans le substrat. Ainsi, sur l'élément prêt à l'emploi, la couche de maintien est sèche, c'est-à-dire sensiblement non imprégnée de liquide.

La présence d'une couche de maintien comprenant une poudre minérale séchée présente de nombreux avantages.

Outre la simplicité de fabrication, cette solution assure une grande fiabilité du maintien des graines dans le corps, qu'il s'agisse de petites graines ou de grosses, ainsi qu'une résistance importante aux chocs et aux vibrations.

L'efficacité de la solution selon l'invention se traduit au moment du transport, puisque la poudre minérale séchée permet de fixer solidement la graine sur le corps, mais également au moment du stockage et de la germination. En effet, l'utilisation d'une poudre minérale permet un séchage plus rapide qu'avec une colle alimentaire, ce qui se traduit par la réduction du temps d'exposition de la graine à l'humidité. Il s'ensuit un meilleur taux de germination après conservation puisque la graine n'est pas restée longtemps dans un milieu humide, ce qui aurait pu avoir pour effet d'enclencher le processus de germination et de compromettre la qualité de la graine pour la suite. En outre, au moment de l'utilisation de l'élément, la poudre minérale apporte des nutriments essentiels au développement de la plante.

Un autre avantage significatif de l'invention est de fournir un élément présentant un aspect naturel, ce qui est généralement un facteur important pour l'utilisateur de tels systèmes de culture.

Selon une réalisation possible, la couche de maintien recouvre et englobe la ou les graines dans la zone de réception. Le fait d'enrober les graines - par opposition à un simple dépôt de film comme c'est le cas avec de la colle alimentaire - permet de protéger la ou les graines des agressions extérieures, mais également d'apporter un taux d'humidité plus important autour de la graine au moment de l'utilisation de l'élément.

On peut prévoir que la zone de réception comprenne un logement en creux formé dans le corps et ouvert vers le haut, en position d'utilisation de l'élément, la ou les graines étant disposées au fond du logement. Dans ce cas, la couche de maintien peut recouvrir au moins en partie la surface intérieure du logement, et non uniquement la ou les graines. On obtient ainsi une protection encore meilleure de la graine.

La poudre minérale peut être une poudre minérale naturelle. Elle peut par exemple contenir des silicates.

Selon une réalisation possible, la poudre minérale est choisie dans le groupe comportant : l'argile, le talc, la pierre ponce.

La poudre minérale peut posséder une granulométrie comprise entre 5 et 200 µm, de préférence entre 20 et 100 µm, mieux encore entre 30 et 60 µm, par exemple de l'ordre de 45 µm.

En outre, la couche de maintien peut comprendre au moins un composé choisi parmi : un fongicide, un agent promoteur de la germination.

Selon un deuxième aspect, l'invention concerne un système de culture d'au moins une plante, comprenant :
- un bac comportant un fond, une paroi périphérique et une ouverture supérieure, ledit bac étant destiné à contenir de l'eau ;
- un plateau disposé au niveau de l'ouverture supérieure du bac, comportant au moins une fenêtre ;
- au moins un mât supportant au moins une source lumineuse ;
- au moins un élément tel que précédemment décrit ;
- au moins un récipient comprenant un fond et une paroi périphérique, le récipient recevant ledit élément et étant placé dans le bac et reçu dans une fenêtre du plateau.

Selon un troisième aspect, l'invention concerne un procédé de réalisation d'un élément destiné à être placé dans un récipient pour la culture d'au moins une plante, l'élément comprenant un corps sensiblement solide comportant un substrat apte à permettre à ladite plante de se développer, et au moins une graine de ladite plante disposée sur le corps dans une zone de réception de graines, le procédé comprenant le dépôt d'une composition de maintien sur la ou les graines préalablement disposées sur le corps, en vue de maintenir la ou les graines dans ladite zone de réception. Selon l'invention, le procédé comprend le dépôt d'une composition de maintien qui comporte une poudre minérale en suspension dans de l'eau.

De façon concrète, le substrat contenu dans le corps ou formant le corps absorbe rapidement le liquide, laissant un dépôt d'argile (et d'éventuels additifs) à la surface du corps, ce dépôt recouvrant et englobant la ou les graines. Le séchage du substrat permet alors de déshydrater la couche d'argile et de maintenir fermement la ou les graines à l'emplacement souhaité. En pratique, on peut procéder à un séchage naturel, en entreposant l'élément dans un environnement intérieur standard (humidité et température classiques) pour une phase de séchage de douze heures environ), avant le conditionnement final.

Outre les avantages obtenus sur l'élément prêt à l'emploi, comme exposé précédemment, le procédé selon l'invention présente lui aussi des avantages, en particulier une grande simplicité de mise en œuvre. Par ailleurs, le procédé selon l'invention permet d'adapter aisément la composition en fonction des semences, notamment la quantité de poudre minérale en fonction de la taille des graines, et/ou les éventuels additifs selon les propriétés recherchées (temps de germination, protection contre des maladies, des moisissures etc.).

La poudre minérale peut être une poudre minérale naturelle pouvant par exemple contenir des silicates. La poudre minérale peut être choisie dans le groupe comportant : l'argile, le talc, la pierre ponce.

Selon une réalisation possible, la composition de maintien comprend de 15 à 25% en masse, par exemple de l'ordre de 20% en masse, de poudre minérale. Cette poudre minérale peut présenter une granulométrie comprise entre 5 et 200 µm, de préférence entre 20 et 100 µm, mieux encore entre 30 et 60 µm, par exemple de l'ordre de 45 µm. Il peut notamment s'agir d'une poudre d'argile possédant une granulométrie voisine de 45 µm.

Le procédé peut comporter le brassage de la composition de maintien préalablement à son dépôt sur la ou les graines. Un tel brassage visant à éviter que la poudre minérale ne se dépose ou ne s'amalgame, et à homogénéiser la composition de maintien, il est de préférence réalisé immédiatement avant le dépôt de la composition de maintien sur la ou les graines.

Le dépôt de la composition de maintien peut être réalisé au moyen d'un système de pompe. En variante, il peut être effectué manuellement, par exemple avec une pipette.

En outre, la composition de maintien peut comprendre au moins un composé choisi parmi : un fongicide, un agent promoteur de la germination.

Lorsque la zone de réception comprend un logement en creux formé dans le corps et ouvert vers le haut, en position d'utilisation de l'élément, la ou les graines étant disposées au fond du logement, le procédé peut comprendre le dépôt d'une composition de maintien en quantité suffisante pour sensiblement remplir le logement.

On décrit à présent, à titre d'exemple non limitatif, un mode de réalisation possible de l'invention, en référence aux figures annexées :
La figure 1 est une vue en perspective éclatée d'un système de culture d'au moins une plante selon l'invention ;
La figure 2 est une vue en perspective d'un élément selon l'invention, prêt à être placé dans un récipient du système ;
La figure 3 est une vue schématique d'un élément illustrant le dépôt de graines et d'une composition de maintien des graines sur l'élément ;
Les figures 4a à 4d illustrent schématiquement des étapes du procédé de dépôt d'une composition de maintien sur un élément ;
La figure 5 est une représentation schématique d'un mode de réalisation possible du procédé selon l'invention.

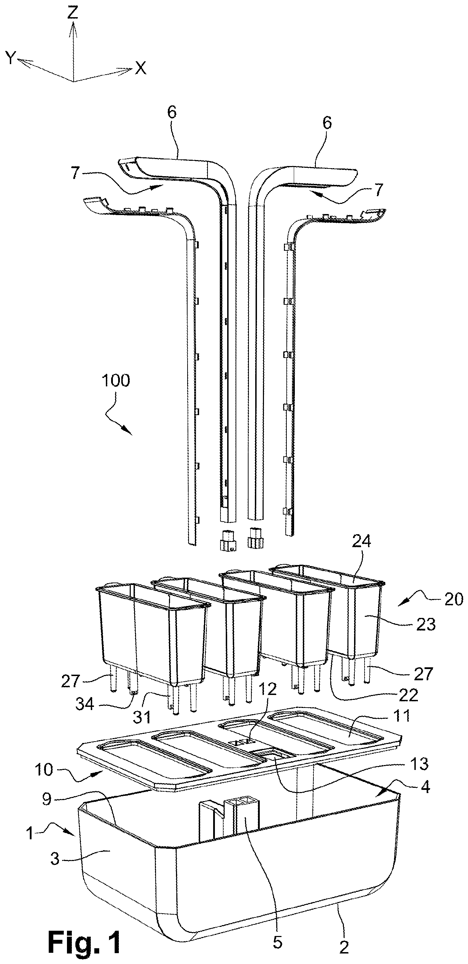

La figure 1 représente un système de culture 100 d'au moins une plante, qui est tout particulièrement adapté pour permettre la culture à l'intérieur d'un bâtiment.

Le système 100 comprend un bac 1 qui comporte un fond 2, généralement plan, une paroi périphérique 3 et une ouverture supérieure 4. Le bac 1 est par exemple sensiblement parallélépipédique. Est ainsi défini à l'intérieur du bac 1 un espace de réception étanche, destiné à contenir de l'eau ou un autre liquide approprié, pour permettre la culture des plantes.

On définit la direction verticale Z, orthogonale au fond 2 lorsque le bac 1 est placé sur un support tel qu'une table ou un plan de travail. On définit également la direction horizontale X, parallèle aux grands côtés du bac 1, et la direction horizontale Y, parallèle aux petits côtés du bac 1. Dans la description qui suit, les différentes pièces ou composants seront décrits dans la position qu'ils occupent en fonctionnement.

Depuis le fond 2 du bac 1 fait saillie un support 5, selon Z et vers le haut. Un ou plusieurs mâts 6 (deux mâts dans l'exemple représenté) sont engagés sur ou dans le support 5. Chaque mât 6 porte une pluralité de sources lumineuses 7, par exemple des diodes électroluminescentes (LED), fournissant l'énergie lumineuse nécessaire à la croissance des plantes.

Le système 100 comprend de plus un plateau 10 disposé au niveau de l'ouverture supérieure 4 du bac. Le plateau 10 peut par exemple être fixé de façon amovible sur le bord supérieur 9 de la paroi périphérique 3 du bac 1.

Le plateau 10 comprend au moins une fenêtre 11 destinée à recevoir un récipient 20 contenant les plantes, la fenêtre 11 présentant de préférence une forme complémentaire de celle du récipient 20. Dans la réalisation représentée à titre d'exemple, le plateau 10 comprend quatre fenêtres 11. En outre, les fenêtres 11 sont sensiblement rectangulaires, avec le grand côté orienté parallèlement à Y, ceci n'étant pas limitatif. Le plateau 10 comprend de plus des trous 12 pour le passage des mâts 6, et un trou 13 permettre à l'utilisateur de verser de l'eau au fond du bac 1 sans avoir à ôter le plateau 10.

Un récipient 20 est destiné à être placé dans le bac 1, dans chacune des fenêtres 11 du plateau 10. Le récipient 20 peut être réalisé en matière plastique, par exemple par moulage. Le récipient 20 comprend un fond 22 et une paroi périphérique 23, et possède une ouverture supérieure 24. Il est ici sensiblement parallélépipédique, ceci n'étant pas limitatif.

Le récipient 20 peut être pourvu de pieds 27 s'étendant à partir du fond 22 vers le bas, pour permettre un appui sur le fond 2 du bac 1 et un maintien à distance par rapport au fond 2 du bac 1. On peut prévoir que, en position montée, le récipient 20 affleure sensiblement le plateau 10.

En outre, le récipient 20 comprend une cheminée 31 qui s'étend sensiblement verticalement vers le bas depuis le fond 22, sur une hauteur inférieure ou égale à celle des pieds 27, et qui débouche dans le fond 22. Dans la cheminée 31 est disposé un organe de transport de liquide par capillarité, tel qu'une mèche. Afin que cet organe soit en contact, dans sa partie inférieure, avec l'eau présente dans le bac 1, on peut prévoir que l'organe s'étende au-delà de l'extrémité inférieure de la cheminée 31, et/ou que la cheminée 31 comporte un orifice 34 à sa partie inférieure, par laquelle l'eau peut pénétrer afin d'atteindre l'organe.

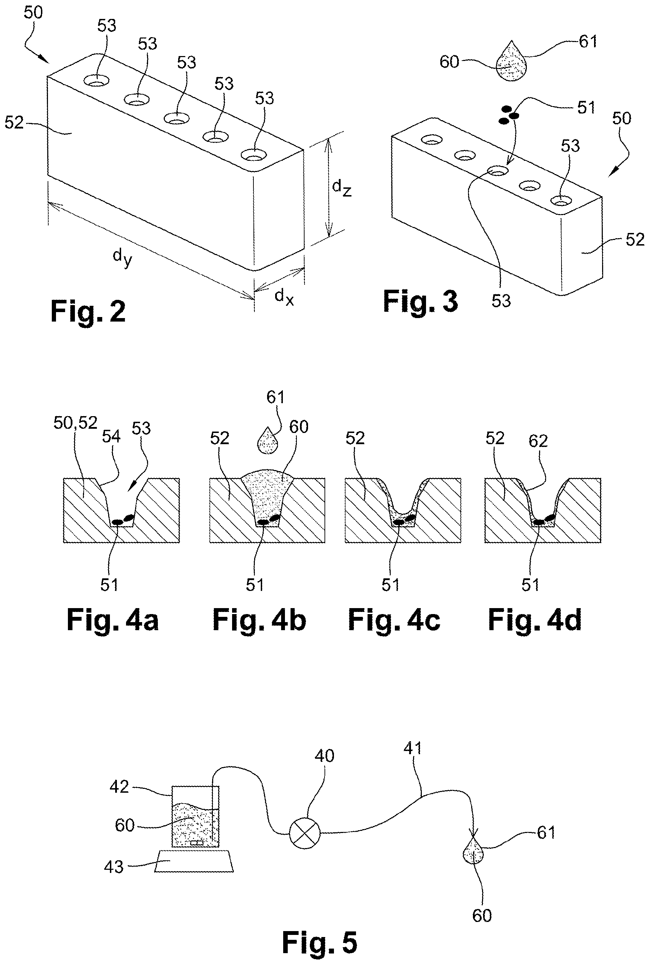

Par ailleurs, le système 100 comprend au moins un élément 50 qui est destiné à être placé dans un récipient 20, comme illustré schématiquement sur la figure 2. L'élément 50, qui constitue une recharge prête à être utilisée, comporte un corps 52 sensiblement solide, dont les dimensions lui permettent d'être inséré dans un récipient 20. L'élément 50 peut ainsi présenter globalement la forme d'un parallélépipède. A titre d'exemple, ses dimensions peuvent être les suivantes : dx = 140 mm, dy = 40 mm, dz = 80 mm.

Le corps 52 comporte un substrat apte à permettre à la plante de se développer. Le substrat peut par exemple comporter une ou plusieurs matières cellulosiques, sous forme de fibres et/ou de poudre, comme des fibres de coco, des fibres de bambou, de la poudre de coco. Le corps 52 peut également comprendre un engrais.

L'élément 50 comprend de plus au moins une graine 51, et en pratique plusieurs graines 51 (voir figure 3). La ou les graines 51 sont disposées sur le corps 52 dans au moins une zone de réception de graines. Par exemple, comme illustré sur les figures 2 et 3, la zone de réception comprend un logement 53 en creux formé dans le corps 52 et ouvert vers le haut, en position d'utilisation de l'élément 50. La ou les graines 51 sont alors disposées au fond du logement 53, comme on le voit notamment sur la figure 4a. Dans la réalisation représentée à titre d'exemple, le corps 51 de l'élément 50 comporte cinq logements 53 alignés selon la direction Y, et régulièrement espacés, ceci n'étant pas limitatif.

Afin d'assurer le maintien des graines 51 sur le corps 52 de l'élément 50, dans la position qui a été prédéterminée pour assurer une germination et une pousse performantes, il est prévu de réaliser dans la zone de réception des graines 51 une couche de maintien de la ou des graines.

Par la suite, la description sera effectuée dans le cas où la zone de réception des graines est formée du logement 53.

Comme illustré sur les figures 3 et 4a, une ou plusieurs graines 51 sont placées au fond de chaque logement 53. Puis, une composition de maintien 60 est déposée sur la ou les graines 51.

Selon l'invention, la composition de maintien 60 comporte une poudre minérale en suspension dans de l'eau.

Par exemple, cette poudre minérale peut être de l'argile, de préférence relativement fine, par exemple ayant une granulométrie comprise entre 30 et 60 µm, de l'ordre de 45 µm. La composition de maintien 60 peut comprendre de 15 à 25% en masse d'argile, par exemple de l'ordre de 20% en masse. D'autres poudres minérales peuvent être utilisées, comme par exemple le talc ou la pierre ponce. Ces choix sont avantageux en ce qu'ils fournissent des solutions naturelles, par opposition à la colle alimentaire.

La composition de maintien 60 peut en outre comprendre un fongicide et/ou un agent promoteur de la germination.

La composition de maintien 60 est déposée en une quantité appropriée pour permettre un maintien satisfaisant des graines 51. De façon concrète, on peut déposer une ou plusieurs gouttes 61 de la composition de maintien 60, par exemple pour sensiblement remplir le logement 53, comme illustré sur la figure 4b.

Le dépôt peut être effectué manuellement. En variante, il peut être effectué via un système mécanique, électrique et/ou hydraulique, au moyen d'une pompe 40 et de tuyaux 41, comme illustré sur la figure 5.

Afin de garantir la bonne homogénéité de la composition de maintien 60 qui sera déposée sur les graines 51, cette composition de maintien 60 est de préférence brassée en continu avant son dépôt, maintenant ainsi l'argile en poudre en suspension. L'obtention d'un liquide homogène est d'autant plus aisée que l'argile utilisée est en poudre très fine. Sur la figure 5, à titre d'exemple, la composition de maintien 60 destinée à être aspirée par la pompe 40 est placée dans un récipient 42 sur un système d'agitation magnétique 43. D'autres solutions sont toutefois envisageables (brassage mécanique, etc.).

L'eau contenue dans la composition de maintien 60 déposée dans le logement 53 va alors être absorbée par le corps 52, typiquement par le substrat, et peut également en partie être évaporée, comme on le voit sur la figure 4c, puis sur la figure 4d.

Des essais ont montré que la période pendant laquelle la poudre minérale reste très humide est d'environ 1 minute (ceci correspondant au temps d'absorption de l'eau par le substrat). Ce temps est relativement faible, comparé à la solution consistant à déposer de la colle alimentaire où la période d'humidité peut être voisine de 10 minutes. Le procédé selon l'invention est ainsi plus avantageux, car la graine étant moins exposée à l'humidité avant l'utilisation de l'élément 50, elle n'est pas altérée et possède une capacité de germination accrue après conservation. Ensuite vient la phase de séchage par évaporation.

La poudre minérale - ici l'argile - séchée se dépose alors à la surface du corps 52 pour former une couche de maintien 62, visible sur la figure 4d. La couche de maintien 62, qui comprend ainsi la poudre minérale séchée, recouvre et englobe la ou les graines 51 dans la zone de réception, formée ici du logement 53. La couche de maintien 62 peut également recouvrir au moins en partie la surface intérieure 54 du logement 53.

Comme on le voit en comparant les figures 4b et 4d, la couche de maintien 62 présente un volume beaucoup plus faible que la ou les gouttes de composition de maintien qui ont été déposées dans le logement 53. En particulier, la couche de maintien 62, qui est donc sèche, ne remplit pas l'ensemble du logement 53. A titre d'exemple, l'épaisseur de la couche de maintien 62 peut être comprise entre 0,2 et 2 mm selon la concentration en argile de la composition de maintien 60, et la quantité de composition de maintien 60 déposée.

L'élément 50 ainsi réalisé, contenant les graines 51 fixées solidement sur le corps 50 grâce à la couche de maintien 62, peut être transporté et stocké sans risque pour les graines 51, jusqu'à l'utilisation par le consommateur.

De façon concrète, l'utilisateur n'a qu'à placer un élément 50 dans un récipient 20. Par capillarité, le substrat va se réhydrater, et apporter de l'humidité à la couche de maintien 62 et aux graines 51. Comparativement aux solutions de l'art antérieur, et en particulier à l'utilisation de colle alimentaire, l'emploi d'une poudre minérale est avantageux car il permet, en fonctionnement, de former un environnement plus humide pour la graine 51, qui est propice à son développement.

Un autre avantage important de l'invention réside dans le fait que l'on peut facilement adapter la composition de maintien 60 aux différents types de graines 51, en vue d'assurer un maintien approprié sur le corps 50 et une protection satisfaisante.

Ainsi, d'une part, la composition de maintien 60 peut être adaptée à la taille des graines 51. En effet, il existe des graines de petites dimensions, généralement sphériques ou de forme très arrondie, qui peuvent être aisément fixées. Mais il existe également des graines plus grosses, telles que les graines de tomate et de poivron (en forme de disque assez plat) ou des graines de ciboulette (en croissant de lune strié), ainsi que des graines enrobées, qui sont lourdes et globalement sphériques d'un diamètre variant de 2 à 5 mm. Ces graines plus grosses sont très difficiles à maintenir sur le corps avec les solutions de l'art antérieur. L'invention permet au contraire d'assurer un maintien efficace de ces graines, grâce à l'emploi de poudre minérale séchée. De plus, en augmentant la concentration de poudre minérale dans la composition de maintien (jusqu'à environ 30 % par exemple), on obtient un dépôt de poudre séchée plus épais, et cette couche de maintien plus épaisse permet un meilleur maintien des grosses graines.

D'autre part, la composition de maintien 60 peut être adaptée à la nature des graines, du substrat et/ou aux conditions environnantes, notamment, par la présence d'additifs choisis pour améliorer le temps de germination, protéger contre des maladies ou des moisissures, etc.

Ainsi, l'invention apporte une amélioration déterminante à la technique antérieure, en fournissant un élément pouvant être transporté, stocké et utilisé sans risque de perte ou d'altération des graines.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons, tel que décrit dans les revendications annexées.

## Revendications

1. Elément destiné à être placé dans un récipient (20) pour la culture d'au moins une plante, l'élément (50) comprenant :
- un corps (52) sensiblement solide comportant un substrat apte à permettre à ladite plante de se développer ;
- au moins une graine (51) de ladite plante disposée sur le corps (52) dans au moins une zone de réception (53) de graines ;
- une couche de maintien (62) de la ou des graines (51) dans ladite zone de réception (53) ;
**caractérisé en ce que** ladite couche de maintien (62) comprend une poudre minérale séchée formant un dépôt configuré pour fixer solidement la graine sur le corps.

2. Elément selon la revendication 1, **caractérisé en ce que** la couche de maintien (62) recouvre et englobe la ou les graines (51) dans la zone de réception (53).

3. Elément selon la revendication 1 ou 2, **caractérisé en ce que** la zone de réception (53) comprend un logement en creux formé dans le corps (52) et ouvert vers le haut, en position d'utilisation de l'élément (50), la ou les graines (51) étant disposées au fond du logement (53).

4. Elément selon la revendication 3, **caractérisé en ce que** la couche de maintien (62) recouvre au moins en partie la surface intérieure du logement (53).

5. Elément selon l'une des revendications 1 à 4, **caractérisé en ce que** la poudre minérale est une poudre minérale naturelle pouvant par exemple contenir des silicates.

6. Elément selon l'une des revendications 1 à 5, **caractérisé en ce que** la poudre minérale est choisie dans le groupe comportant : l'argile, le talc, la pierre ponce.

7. Elément selon l'une des revendications 1 à 5, **caractérisé en ce que** la poudre minérale possède une granulométrie comprise entre 5 et 200 µm, de préférence entre 20 et 100 µm, mieux encore entre 30 et 60 µm.

8. Système de culture d'au moins une plante, comprenant :
- un bac (1) comportant un fond (2), une paroi périphérique (3) et une ouverture supérieure (4), ledit bac (4) étant destiné à contenir de l'eau ;
- un plateau (10) disposé au niveau de l'ouverture supérieure (4) du bac (1), comportant au moins une fenêtre (11) ;
- au moins un mât (6) supportant au moins une source lumineuse (7) ;
- au moins un élément (50) selon l'une des revendications 1 à 7 ;
- au moins un récipient (20) comprenant un fond (22) et une paroi périphérique (23), le récipient (20) recevant ledit élément (50) et étant placé dans le bac (1) et reçu dans une fenêtre (11) du plateau (10).

9. Procédé de réalisation d'un élément (50) destiné à être placé dans un récipient (20) pour la culture d'au moins une plante, l'élément (50) comprenant un corps (52) sensiblement solide comportant un substrat apte à permettre à ladite plante de se développer, et au moins une graine (51) de ladite plante disposée sur le corps (52) dans une zone de réception (53) de graines, le procédé comprenant le dépôt d'une composition de maintien (60) sur la ou les graines (51) préalablement disposées sur le corps (52), en vue de maintenir la ou les graines (51) dans ladite zone de réception (53), **caractérisé en ce que** le procédé comprend le dépôt d'une composition de maintien (60) qui comporte une poudre minérale en suspension dans de l'eau.

10. Procédé selon la revendication 9, **caractérisé en ce que** la composition de maintien (60) comprend de 15 à 25% en masse, par exemple de l'ordre de 20% en masse, d'argile possédant une granulométrie comprise entre 30 et 60 µm, par exemple de l'ordre de 45 µm.

11. Procédé selon la revendication 9 ou 10, **caractérisé en ce qu'**il comprend le brassage de la composition de maintien (60) préalablement à son dépôt sur la ou les graines (51).

12. Procédé selon l'une des revendications 9 à 11, **caractérisé en ce que** la composition de maintien (60) comprend en outre au moins un composé choisi parmi : un fongicide, un agent promoteur de la germination.

13. Procédé selon l'une des revendications 9 à 12, la zone de réception (53) comprenant un logement en creux formé dans le corps (52) et ouvert vers le haut, en position d'utilisation de l'élément (50), la ou les graines (51) étant disposées au fond du logement (53), **caractérisé en ce qu'**on dépose une composition de maintien (60) en quantité suffisante pour sensiblement remplir le logement (53).

## Patentansprüche

1. Element, das dazu bestimmt ist, in einem Behälter (20) für die Anzucht mindestens einer Pflanze untergebracht zu werden, wobei das Element (50) umfasst:
- einen im Wesentlichen festen Körper (52), der ein Substrat umfasst, das in der Lage ist, der Pflanze zu ermöglichen, sich zu entwickeln;
- mindestens einen Samen (51) der Pflanze, der in mindestens einem Bereich zur Aufnahme (53) von Samen am Körper (52) angeordnet ist;
- eine Schicht zum Halten (62) des oder der Samen (51) im Aufnahmebereich (53);
**dadurch gekennzeichnet, dass** die Halteschicht (62) ein getrocknetes Mineralpulver umfasst, das eine Ablagerung bildet, die dafür konfiguriert ist, den Samen fest am Körper zu fixieren.

2. Element nach Anspruch 1, **dadurch gekennzeichnet, dass** die Halteschicht (62) den oder die Samen (51) im Aufnahmebereich (53) bedeckt und umgibt.

3. Element nach Anspruch 1 oder 2, **dadurch gekennzeichnet, dass** der Aufnahmebereich (53) eine hohle Mulde umfasst, die im Körper (52) gebildet und in Gebrauchsstellung des Elements (50) nach oben offen ist, wobei der oder die Samen (51) am Boden der Mulde (53) angeordnet sind.

4. Element nach Anspruch 3, **dadurch gekennzeichnet, dass** die Halteschicht (62) die Innenfläche der Mulde (53) mindestens zum Teil bedeckt.

5. Element nach einem der Ansprüche 1 bis 4, **dadurch gekennzeichnet, dass** es sich beim Mineralpulver um ein natürliches Mineralpulver handelt, das zum Beispiel Silikate enthalten kann.

6. Element nach einem der Ansprüche 1 bis 5, **dadurch gekennzeichnet, dass** das Mineralpulver ausgewählt ist aus der Gruppe, umfassend: Lehm, Talk, Bimsstein.

7. Element nach einem der Ansprüche 1 bis 5, **dadurch gekennzeichnet, dass** das Mineralpulver eine Körnung im Bereich zwischen 5 und 200 µm, vorzugsweise zwischen 20 und 100 µm,besser noch zwischen 30 und 60 µm besitzt.

8. System zur Anzucht mindestens einer Pflanze, umfassend:
- eine Wanne (1), die einen Boden (2), eine Umfangswand (3) und eine obere Öffnung (4) umfasst, wobei die Wanne (4) dazu bestimmt ist, Wasser zu enthalten;
- eine auf Höhe der oberen Öffnung (4) der Wanne (1) angeordnete Platte (10), die mindestens ein Fenster (11) umfasst;
- mindestens einen Mast (6), der mindestens eine Lichtquelle (7) trägt;
- mindestens ein Element (50) nach einem der Ansprüche 1 bis 7;
- mindestens einen Behälter (20), der einen Boden (22) und eine Umfangswand (23) umfasst, wobei der Behälter (20) das Element (50) aufnimmt und in der Wanne (1) untergebracht und in einem Fenster (11) der Platte (10) aufgenommen ist.

9. Verfahren zur Herstellung eines Elements (50), das dazu bestimmt ist, in einem Behälter (20) für die Anzucht mindestens einer Pflanze untergebracht zu werden, wobei das Element (50) einen im Wesentlichen festen Körper (52), der ein Substrat umfasst, das in der Lage ist, der Pflanze zu ermöglichen, sich zu entwickeln, und mindestens einen Samen (51) der Pflanze umfasst, der in einem Bereich zur Aufnahme (53) von Samen am Körper (52) angeordnet ist, wobei das Verfahren das Ablagern einer Haltezusammensetzung (60) auf dem oder den zuvor am Körper (52) angeordneten Samen (51) umfasst, um den oder die Samen (51) im Aufnahmebereich (53) zu halten, **dadurch gekennzeichnet, dass** das Verfahren das Ablagern einer Haltezusammensetzung (60) umfasst, die ein in Wasser suspendiertes Mineralpulver umfasst.

10. Verfahren nach Anspruch 9, **dadurch gekennzeichnet, dass** die Haltezusammensetzung (60) 15 bis 25 Masse-%, zum Beispiel in der Größenordnung von 20 Masse-% Lehm umfasst, der eine Körnung im Bereich zwischen 30 und 60 µm, zum Beispiel in der Größenordnung von 45 µm besitzt.

11. Verfahren nach Anspruch 9 oder 10, **dadurch gekennzeichnet, dass** es das Durchmischen der Haltezusammensetzung (60) vor deren Ablagern an dem oder den Samen (51) umfasst.

12. Verfahren nach einem der Ansprüche 9 bis 11, **dadurch gekennzeichnet, dass** die Haltezusammensetzung (60) weiter mindestens eine Verbindung umfasst, ausgewählt aus: einem Fungizid, einer Keimhilfe.

13. Verfahren nach einem der Ansprüche 9 bis 12, wobei der Aufnahmebereich (53) eine hohle Mulde umfasst, die im Körper (52) gebildet und in Gebrauchsstellung des Elements (50) nach oben offen ist, wobei der oder die Samen (51) am Boden der Mulde (53) angeordnet werden, **dadurch gekennzeichnet, dass** eine Haltezusammensetzung (60) in ausreichender Menge abgelagert wird, um die Mulde (53) im Wesentlichen zu füllen.

## Claims

1. An element intended to be placed in a receptacle (20) for the cultivation of at least one plant, the element (50) comprising:
- a substantially solid body (52) including a substrate capable of allowing said plant to develop;
- at least one seed (51) of said plant disposed on the body (52) in at least one seed receiving area (53);
- a layer (62) for holding the seed(s) (51) in said receiving area (53);
**characterized in that** said holding layer (62) comprises a dried mineral powder forming a deposition configured to securely fix the seed on the body.

2. The element according to claim 1, **characterized in that** the holding layer (62) covers and encompasses the seed(s) (51) in the receiving area (53).

3. The element according to claim 1 or 2, **characterized in that** the receiving area (53) comprises a recessed housing formed in the body (52) and upwardly open, in the position of use of the element (50), the seed(s) (51) being disposed at the bottom of the housing (53).

4. The element according to claim 3, **characterized in that** the holding layer (62) at least partly covers the internal surface of the housing (53).

5. The element according to any of claims 1 to 4, **characterized in that** the mineral powder is a natural mineral powder which may for example contain silicates.

6. The element according to any of claims 1 to 5, **characterized in that** the mineral powder is selected from the group including: clay, talc, pumice stone.

7. The element according to any of claims 1 to 5, **characterized in that** the mineral powder has a grain-size comprised between 5 and 200 µm, preferably between 20 and 100 µm, more preferably between 30 and 60µm.

8. A system for cultivating at least one plant, comprising:
- a vat (1) including a bottom (2), a peripheral wall (3) and an upper opening (4), said vat (4) being intended to contain water;
- a tray (10) disposed at the level of the upper opening (4) of the vat (1), including at least one aperture (11);
- at least one mast (6) supporting at least one light source (7);
- at least one element (50) according to any of claims 1 to 7;
- at least one receptacle (20) comprising a bottom (22) and a peripheral wall (23), the receptacle (20) receiving said element (50) and being placed in the vat (1) and received in an aperture (11) of the tray (10).

9. A method for making an element (50) intended to be placed in a receptacle (20) for the cultivation of at least one plant, the element (50) comprising a substantially solid body (52) including a substrate capable of allowing said plant to develop, and at least one seed (51) of said plant disposed on the body (52) in a seed receiving area (53), the method comprising the deposition of a holding composition (60) on the seed(s) (51) previously disposed on the body (52), in order to hold the seed(s) (51) in said receiving area (53), **characterized in that** the method comprises the deposition of a holding composition (60) which includes a mineral powder suspended in water.

10. The method according to claim 9, **characterized in that** the holding composition (60) comprises from 15 to 25 weight%, for example in the range of 20 weight%, of clay having a grain-size comprised between 30 and 60 µm, for example in the range of 45µm.

11. The method according to claim 9 or 10, **characterized in that** it comprises the mixing of the holding composition (60) prior to its deposition on the seed(s) (51).

12. The method according to any of claims 9 to 11, **characterized in that** the holding composition (60) further comprises at least one compound selected from: a fungicide, a germination promoter agent.

13. The method according to any of claims 9 to 12, the receiving area (53) comprising a recessed housing formed in the body (52) and upwardly open, in the position of use of the element (50), the seed(s) (51) being disposed at the bottom of the housing (53), **characterized in that** a holding composition is deposited (60) in an amount sufficient to substantially fill the housing (53).
